# EUROPÄISCHE PATENTANMELDUNG

(11) **EP 0 529 337 A1**
(43) Veröffentlichungstag der Anmeldung: **03.03.1993**
(21) Anmeldenummer: 92112988.8
(22) Anmeldetag: 30.07.1992
(51) Int. Cl.: E05B 65/08, B60J 1/16

(54) **Fenstergriff**

(30) Priorität: 28.08.1991 DE 9110613 U
(71) Anmelder: MAN Nutzfahrzeuge Aktiengesellschaft, 80976 München (DE)
(72) Erfinder: Kreisel, Helmut, W-8000 München 60 (DE); Christof, Roman, W-8047 Karlsfeld (DE)

(57) **Zusammenfassung**

Die Neuerung bezieht sich auf ein Seitenfenster 1 am Fahrerhaus eines Nutzfahrzeuges mit zwei um Scheibendicke versetzt gegeneinander angeordnete, sich überlappende Scheiben (2, 3), von denen die Scheibe (3) längenverschieblich und mit einem Schiebegriff (4) versehen ist. Der an sich bekannte Schiebegriff (4) ist mit einem vertikalen Rastelement (5) unten, an der Vorderkante der hinteren schiebbaren Scheibe (3) angeordnet. Das höhenverschiebliche Rastelement (5) ist unter Federdruck in den Fensterrahmen (6) eingerastet. Am Fensterrahmen (6) ist ein Winkel (7) angeordnet, in dessen horizontalen Schenkel (8) eine Aussparung (9) vorgesehen ist, in die das Rastelement (5) eingreift.

## Beschreibung

Die Neuerung betrifft Seitenfenster am Fahrerhaus eines Nutzfahrzeuges mit zwei um Scheibendicke versetzt gegeneinander angeordnete, sich überlappende Scheiben, von denen die hintere Scheibe längsverschieblich und mit einem Schiebegriff versehen ist.

Der Schiebegriff befindet sich bei bekannten Fensteranordnungen in Nutzfahrzeugen am hinteren Rand der innenwärts gerichteten Scheibe. Dies ist insofern sehr nachteilig, als daß der Fahrer seitwärts hinter sich greifen muß, um das Fenster zu öffnen. Der Fahrer muß eine rückwärts gerichtete Bewegung durchführen, die unter Umständen zu Verrenkungen führen kann und die auch seine Aufmerksamkeit von der Verkehrssituation ablenkt.

Der Neuerung liegt die Aufgabe zugrunde, den Fahrer zu entlasten.

Dies wird neuerungsgemäß dadurch erreicht, daß ein an sich bekannter Schiebegriff mit vertikalem Rastelement unten, an der Vorderkante der hinteren schiebbaren Scheibe angeordnet ist und das höhenverschiebliche Rastelement unter Federdruck in den Fensterrahmen einrastet. In einer bevorzugten Ausbildungsvariante ist am Fensterrahmen ein Winkel angeordnet, in dessen horizontalen Schenkel eine Aussparung vorgesehen ist, in die das Rastelement eingreift. Auf diese Weise wird eine bequeme Griffposition für den Fahrer erzielt, so daß er ohne Ablenkung vom Straßenverkehr die Scheibe öffnen kann.

Die Neuerung ist in einem Ausführungsbeispiel beschrieben und dargestellt.

Es zeigen:

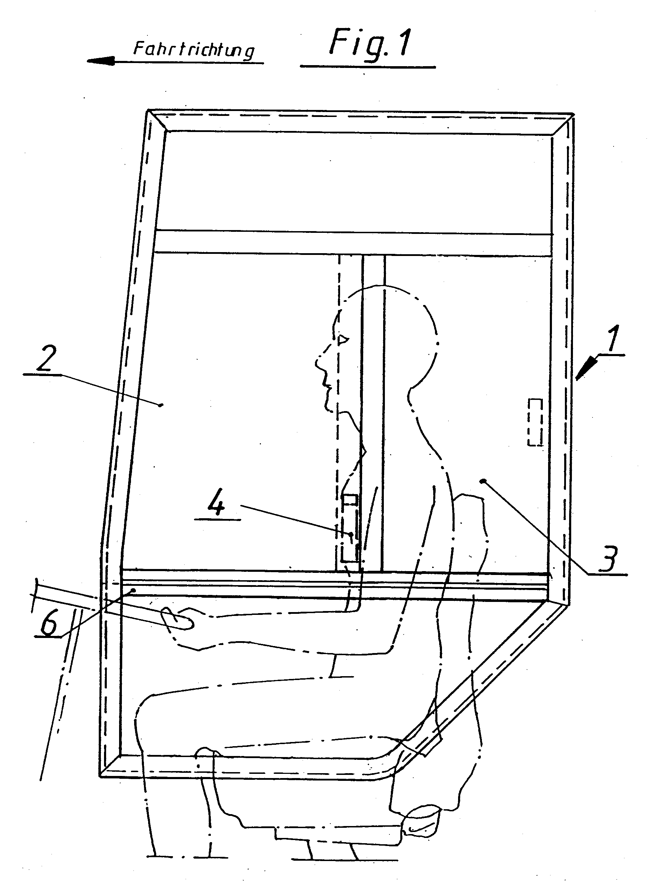

- Fig. 1: eine Vorderansicht des Seitenfensters,

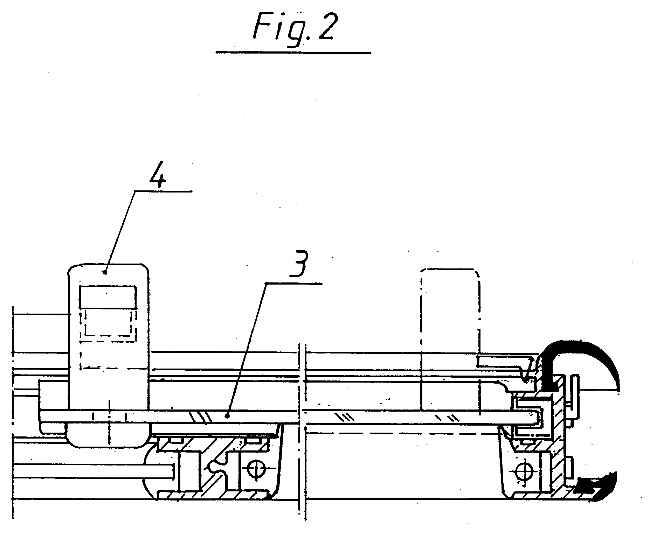

- Fig. 2: eine Draufsicht des Seitenfensters im Schnitt,

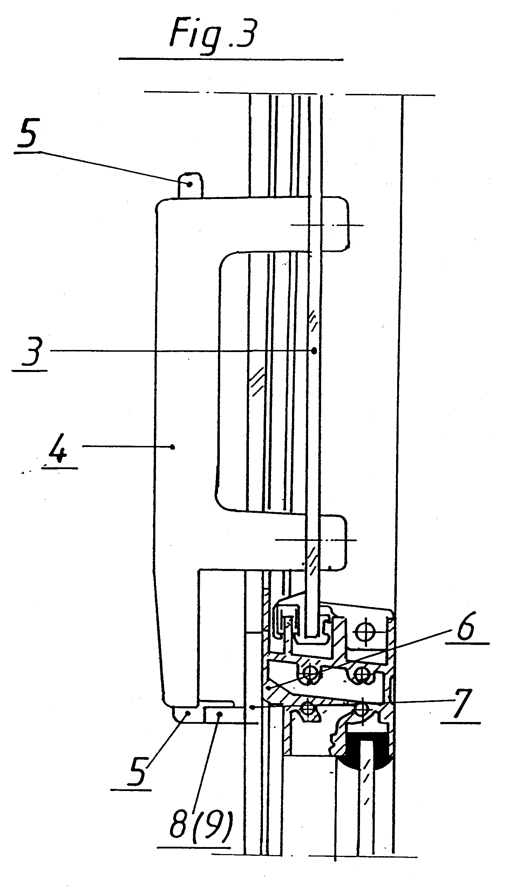

- Fig. 3: eine Seitenansicht des Seitenfensters.

Das Seitenfenster 1 weist zwei Scheiben 2, 3 auf, die, um Scheibendicke gegeneinander versetzt, gegeneinander verschieblich sind, so daß eine Seitenfensterhälfte zu öffnen ist. Das rückwärtige Seitenfenster 3 weist einen an sich bekannten Schiebegriff 4 auf, der an seinem vorderen Rand in einer nahen Position zu einer Längsstrebe des Fensterrahmens 6 angeordnet ist. Am Fensterrahmen 6 ist ein Winkel 7 angebracht, dessen horizontaler Schenkel 8 eine Aussparung 9 aufweist, in die das höhenbetätigbare Rastelement 5 des Schiebegriffes 4 eingreift. Will man die beiden Scheiben gegeneinander entriegeln, so drückt man auf den Auslöseknopf des Rastelementes 5, so daß der untere Eingreifzinken aus der Ebene des Schenkel 8 herausgedrückt wird, wodurch die Seitenverschieblichkeit der Scheibe 3 ermöglicht wird.

### Bezugszeichenliste

- 1: Seitenfenster
- 2: Schiebescheibe od. Scheibe (schiebbar)
- 3: Scheibe
- 4: Schiebegriff
- 5: Rastelement
- 6: Fensterrahmen
- 7: Winkel
- 8: horizontaler Schenkel von 7
- 9: Aussparung in 8

## Patentansprüche

1. Seitenfenster am Fahrerhaus eines Nutzfahrzeuges mit zwei um Scheibendicke versetzt gegeneinander angeordnete, sich überlappende Scheiben, von denen mindestens eine längsverschieblich und mit einem Schiebegriff versehen ist, dadurch gekennzeichnet, daß ein an sich bekannter Schiebegriff (4) mit vertikalem Rastelement (5) unten, an der Vorderkante der hinteren schiebbaren Scheibe (3) angeordnet ist und das höhenverschiebliche Rastelement (5) unter Federdruck in den Fensterrahmen (6) einrastet.

2. Seitenfenster nach Anspruch 1, dadurch gekennzeichnet, daß am Fensterrahmen (6) ein Winkel (7) angeordnet ist, in dessen horizontalem Schenkel (8) eine Aussparung (9) vorgesehen ist, in die das Rasterelement (5) eingreift.
